# EUROPEAN PATENT APPLICATION

(11) **EP 2 551 745 A2**
(43) Date of publication of application: **30.01.2013**
(21) Application number: 11195702.3
(22) Date of filing: 23.12.2011
(51) Int. Cl.: G06F 1/16

(54) **A protective unit and an electronic module comprising the same**

(30) Priority: 27.07.2011 TW 100126542
(71) Applicant: Hannspree, Inc., New Taipei City 248 (TW)
(72) Inventor: Lai, Li-Li, 110 Taiwan (TW); Tsai, Stephen, 221 Taiwan (TW); Hwang, Shao-Yu, 106 Taiwan (TW)
(74) Representative: Tranter, Andrew David

(57) **Abstract**

The present invention relates to an electronic module with protective unit, comprising: an electronic device, a resistor, and a detector. The electronic device includes: an outer shell having a plurality of openings; the resistor has a plurality of protrusion being disposed in the opening correspondingly; the detector is disposed on the outer shell of the electronic device and includes: a sensing unit for executing sensing mechanism; a control unit electrically connected with the sensing unit; a warning signal generating unit electrically connected with the control unit; the sensing unit executes the sensing mechanism continuously, when the sensing mechanism detects a default condition, the sensing unit sends an indicating signal to the control unit to command the protrusion to protrude outside the openings, and the control unit control the warning signal generating unit to generate a warning signal.

## Description

### BACKGROUND OF THE INVENTION

### 1. Field of the Invention

The present invention relates to a protective unit and an electronic device having the same, where the electronic device having the protective unit is capable of detecting if the said device is under an about-to-fall status, and to prevent the electronic device from falling via activating the protective unit.

### 2. Description of Related Art

Miscellaneous electronic products fill the market in line with the progressing of technology. Electronic products such as mobile phones, laptops, personal music players or tablet PC have nowadays become indispensable in peoples' lives.

In regard to electronic devices, the interior electric circuit structure trends toward delicate and hence more easily to cause damages from external impact or accidental falls. While people are using mobile phones, laptops, tablet PCs or other electronic devices, said mobile phones, laptops, tablet PCs or other electronic devices accidental drop due to many kinds of human factors or some other uncontrollable conditions, and cause serious damages to these electronic devices.

Further, the manufacturers attempt to enhance the protecting function of the outer shell of an electronic device in response to the sophisticated interior electric circuit structure. However, the protecting function of the outer shell is limited, being unable to achieve total protection. Moreover, the protecting function of the outer shell is for reducing the damage to the circuit if impacts or accidental falls should occur, but impacts or accidental falls often leaves behind scratches and cracks on the outer shell, thus spoils the appearance of the electronic devices.

For solving the above-mentioned problems, the inventor of the present invention proposes a protective unit and an electronic device having the same for preventing the electronic device from falling, and/or reducing the impact.

### SUMMARY OF THE INVENTION

The object of the present invention is to provide a protective unit and an electronic device having the same, where the electronic device having the protective unit is capable of detecting if said electronic device is under an about-to-fall status, and to prevent the electronic device from falling via activating the protective unit.

To achieve the object, the present invention provides a protective unit, which comprises: an outer shell having a plurality of openings; a resistor having a plurality of protrusions, the plurality of protrusions being disposed in the plurality of openings correspondingly; and a detector being disposed within the outer shell including: a sensing unit for executing a sensing mechanism; a control unit electrically connected with the sensing unit; and a warning signal generating unit electrically connected with the control unit. Wherein the sensing unit executes the sensing mechanism continuously, when the sensing mechanism detects a predetermined condition, the sensing unit sends an indicating signal to the control unit to command the plurality of protrusions of the resistor to protrude outside the plurality of openings. The "resistor" therefore helps to resist movement of the device.

Simultaneously, the control unit controls the warning signal generating unit to generate a warning signal when the sensing unit sends the indicating signal to the control unit.

Herein, the above-mentioned protective unit is used accompanied with an electronic device. Further, the electronic device is not restricted to any sort of electronic device but is preferably to be a tablet PC, a mobile telecommunication device, a laptop computer or a PDA. However, the electronic device is more preferably to be a tablet PC or a mobile telecommunication device.

In addition, the aforementioned protrusions are preferably composed of anti-slip material, elastic material, shock-absorbing material, or any combination thereof. The anti-slip materials, the elastic materials, and the shock-absorbing materials are not restricted to any sort of material, simply, materials with elasticity and functions of shock-absorbing, with ability to achieve slip-prevention, are suitable for the present invention. The anti-slip material is preferably a pile-fabric, or non-woven fabric. Furthermore, the elastic material is preferably rubber or silicone rubber and finally, the shock-absorbing material is preferably foam.

Additionally, the sensing unit is preferably to be an area-contact sensing unit for executing the sensing mechanism and, the sensing mechanism is to monitor any one of several contact areas between the outer shell and an external object. Besides, the predetermined condition is that the contact area between the outer shell of the electronic device and an arbitrary external object be less than a predetermined value, and the default area is between 50% to 70% the surface area of the outer shell.

In addition, the warning signal is preferably to be a warning sound, a warning light, or the combination thereof, but not limited to the abovementioned warning signal; any other kinds of warning signal able to warn the user is suitable in the present invention.

The protective unit preferably further comprises a switching unit, and the switching unit is preferably being disposed between the control unit and the resistor. The switching unit is controlled by the control unit for turning on or off the resistor. By "on" we mean the resistor is positioned so that the protrusions are protruding outside of the openings, and by "off ' we may mean they do not protrude.

Additionally, the protective unit preferably further comprises a power supply unit. The power supply unit is for supplying power to the protective unit to maintain the operation thereof.

To achieve the object, the present invention provides an electronic module having a protective unit, which comprises: an electronic device, a resistor, and a detector. The electronic device includes: an outer shell having a plurality of openings. The resistor has a plurality of protrusions, the plurality of protrusions is disposed in the plurality of openings correspondingly; the detector is disposed within the electronic device including: a sensing unit for executing a sensing mechanism; a control unit electrically connected with the sensing unit; and a warning signal generating unit electrically connected with the control unit. Wherein the sensing unit executes the sensing mechanism continuously, when the sensing mechanism detects a predetermined condition, the sensing unit sends an indicating signal to the control unit to command the plurality of protrusions of the resistor to protrude outside the plurality of openings.

Simultaneously, the control unit controls the warning signal generating unit to generate a warning signal when the sensing unit sends the indicating signal to the control unit.

Further, the electronic device is not restricted to any sort of electronic device but is preferably to be a mobile telecommunication device, a tablet PC, laptop computer or a PDA. However, the electronic device is more preferably to be a mobile telecommunication device or a tablet PC.

In addition, the aforementioned protrusions are preferably composed of anti-slip material, elastic material, shock-absorbing material, or any combination thereof. The anti-slip materials, the elastic materials, and the shock-absorbing materials are not restricted to any sort of material, simply, materials with elasticity and functions of shock-absorbing, with ability to achieve slip-prevention are suitable for the present invention. The anti-slip material is preferably a pile-fabric, or non-woven fabric. Furthermore, the elastic material is preferably rubber or silicone rubber and finally, the shock-absorbing material is preferably foam.

Additionally, the sensing unit is preferably to be an area-contact sensing unit for executing the sensing mechanism and, the sensing mechanism is to monitor any one of several contact areas between the outer shell of the electronic device and an external object. Besides, the predetermined condition is that the contact area between the outer shell of the electronic device and an arbitrary external object be less than a predetermined value, and the default area is of 50% to 70% of the surface area of the outer shell.

In addition, the warning signal is preferably to be a warning sound, a warning light, or any combination thereof but not limited to the abovementioned warning signal; any other kinds of warning signal able to warn the user is suitable in the present invention.

Furthermore, the protective unit further comprises a switching unit, and the switching unit is preferably being disposed between the control unit and the resistor. The switching unit is controlled by the control unit for turning on or off the resistor.

With the above description, it can be seen that the sensing mechanism executed by the sensing unit is to monitor any one of several contact areas between the outer shell of the electronic device and an external object, and to detect if the electronic device accompanied with is under an about-to-fall status according to the consequence of the monitoring, and therefore action to prevent the electronic device from falling is performed. Moreover, when the electronic device detects about-to-fall status, the friction will increase on the contact area between the protective unit and the external object due to the assistance of the protrusions, thus, prevent the electronic device from falling. Besides, a warning signal is further provided from the protective unit of the present invention, therefore, a user is warned that the electronic device itself is in a potential state of falling, letting the user to take action to secure the electronic device. Thus, the electronic device is further prevented from damage due to the fall.

With the above description, it can be seen that an electronic module with the protective unit is provided as well. The protective unit is integrated with an electronic device. In addition to the above efficiencies, the convenience to users is increased accordingly.

Other objects, advantages, and novel features of the invention will become more apparent from the following detailed description when taken in conjunction with the accompanying drawings.

### BRIEF DESCRIPTION OF THE DRAWINGS

FIG 1 is a schematic view illustrating the protective unit of embodiment 1 of the present invention;
FIG 2 is a schematic view illustrating the detector 13 of the protective unit 100 according to embodiment 1 of the present invention;
FIG 3 is a schematic view of a tablet PC 31 accompanied with the protective unit 100 according to embodiment 1 of the present invention;
FIG. 4 is a schematic view to illustrate the employment of a tablet PC 31 accompanied with the protective unit 100 according to embodiment 1 of the present invention;
FIG 5 is a schematic view illustrating the electronic module 5 having the protective unit of embodiment 2 of the present invention; and
FIG 6 is a schematic view illustrating the detector 52 of the electronic module 5 having the protective unit according to embodiment 2 of the present invention.

### DETAILED DESCRIPTION OF THE PREFERRED EMBODIMENT

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

### Embodiment 1

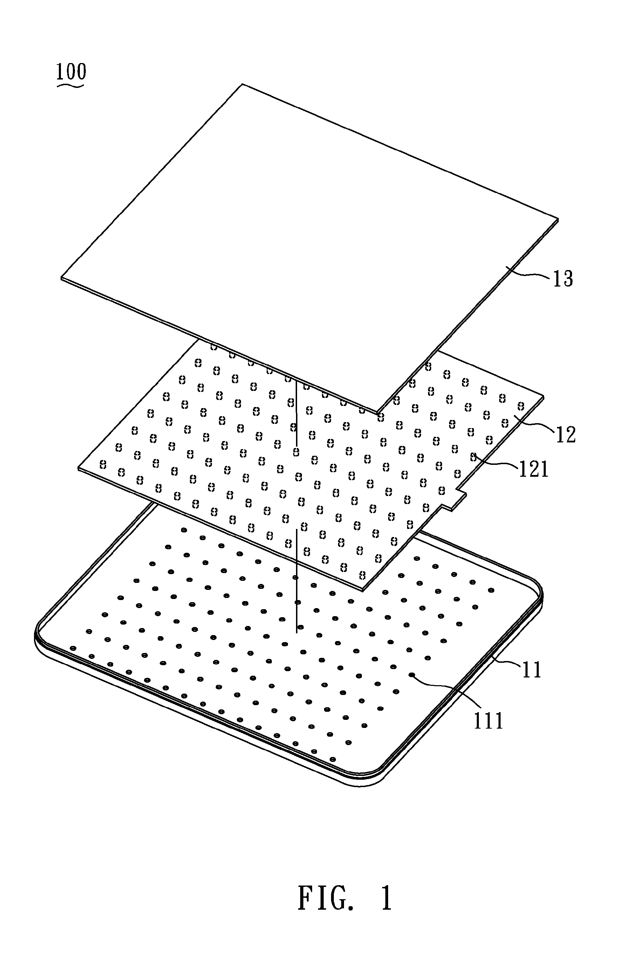

The present embodiment is for providing a protective unit 100. Concerning to the protective unit 100 of the present embodiment, please refer to FIG 1, which is a schematic view illustrating the protective unit 100 of embodiment 1 of the present invention. As shown in FIG 1, the protective unit 100 comprises: an outer shell 11, a resistor comprising a resistant member 12, and a detector or detecting member 13. The outer shell 11 has a plurality of openings 111, the resistor 12 has a plurality of protrusions 121 and the plurality of protrusions 121 is disposed in the plurality of openings correspondingly.

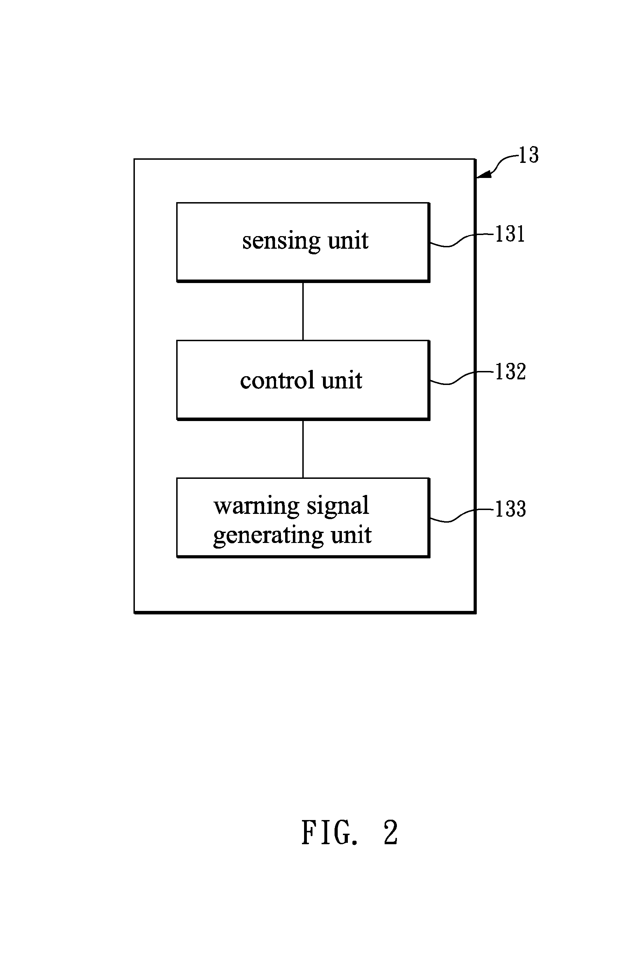

Besides, the detector 13 is disposed within the outer shell 11. Please refer to FIG. 2 simultaneously, which is a schematic view illustrating the detector 13 of the protective unit 100 according to embodiment 1 of the present invention. As shown in FIG 2, the detector 13 includes: a sensing unit 131, a control unit 132, and a warning signal generating unit 133. Furthermore, the sensing unit 131 is for executing a sensing mechanism; the control unit 132 is electrically connected with the sensing unit 131; and the warning signal generating unit 133 is electrically connected with the control unit 132. Wherein the sensing unit 131 executes the sensing mechanism continuously, when the sensing mechanism detects a predetermined condition, the sensing unit 131 sends an indicating signal to the control unit 132 to command the plurality of protrusions 121 of the resistor 12 to protrude outside the plurality of openings 111. The resistor may deform in order to achieve this result, though the use of a suitable actuator or other electrical or mechanical means. The control unit 132 then controls the warning signal generating unit 133 to generate a warning signal.

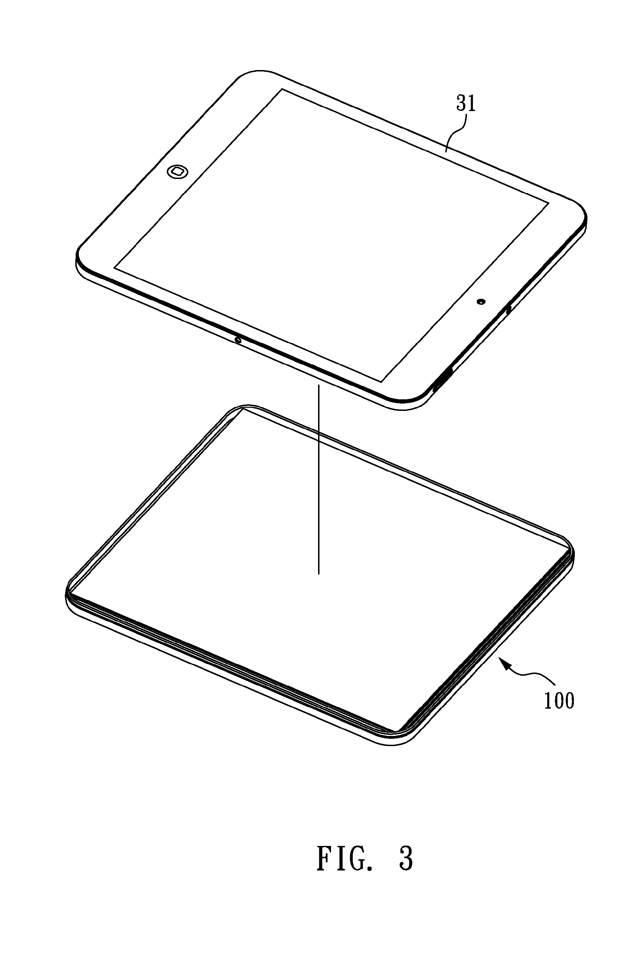

Please refer to FIG 3 simultaneously, which is a schematic view of a tablet PC 31 accompanied with the protective unit 100 according to embodiment 1 of the present invention. As shown in FIG 3, a tablet PC 31 is accompanied with the protective unit 100 of embodiment 1 while the protective unit 100 is under employment. An exemplary employment is exactly as shown in FIG 3. The tablet PC 31 of the present embodiment is a flat panel tablet.

Further, the sensing unit 131 executes the sensing mechanism continuously, and the sensing unit 131 of the present embodiment is to be an area-contact sensing unit. The sensing mechanism is to monitor any one of several contact areas between the outer shell 11 and an external object.

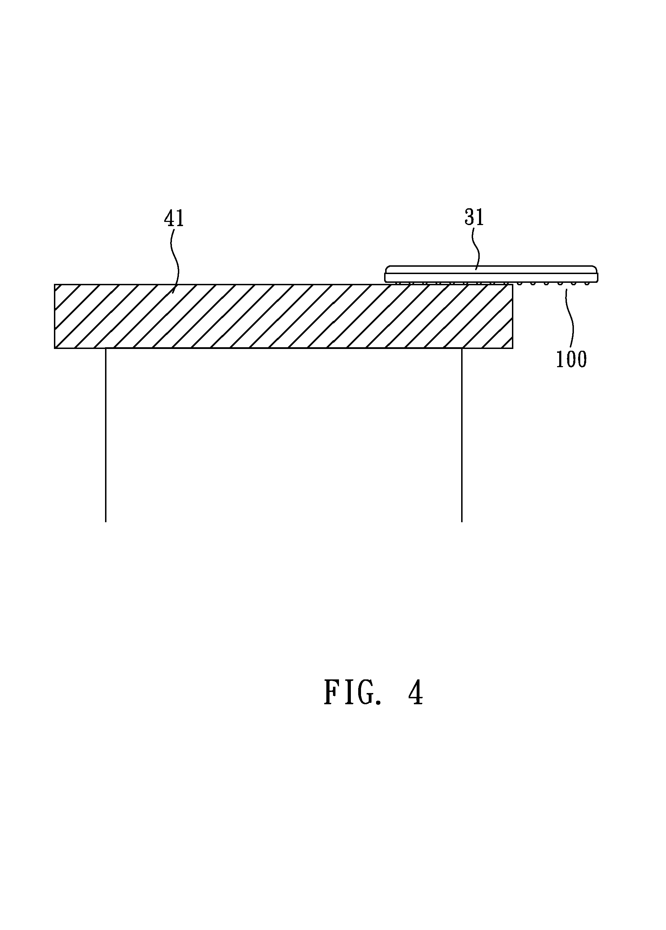

Please refer to FIG 4 simultaneously, which is a schematic view to illustrate the employment of a tablet PC 31 accompanied with the protective unit 100 according to embodiment 1 of the present invention. As shown in FIG 4, a tablet PC 31 accompanied with the protective unit 100 according to embodiment 1 of the present invention is disposed on a desk 41. Herein, the sensing unit 131 monitors the contact area between the outer shell 11 and the desk 41. Moreover, as still shown in FIG 4, the portable computer 31 accompanied with the protective unit 100 according to embodiment 1 of the present invention is not totally in contact with the desk, but stays in an about-to-fall status.

At this moment, the sensing unit 131 monitors that the contact area between the outer shell 11 and the desk 41 is smaller than a predetermined value, wherein the predetermined value of the present embodiment is set to be of 55% to 65% to the surface area of the outer shell 11. The sensing unit 131 sends the consequence of the monitoring to the control unit 132, and the control unit 132 detects that the portable computer 31 is in an about-to-fall status according to the consequence of the monitoring. Subsequently, the control unit 132 controls the protrusions 121 of the resistor 12, letting the protrusions 121 protrude outside the openings 111.

Herein, the protrusions 121 of the present embodiment are composed of anti-slip material, elastic material, shock-absorbing material, or any combination thereof. The intention of the protrusions 121 is to augment the friction between the table PC 31 and the desk 41 while the tablet PC 31 is in that about-to-fall status, in order to increase the difficulty of the tablet PC 31 moving towards the edge of the desk 41, to prevent the tablet PC 31 1 from falling off the desk 41 and cause damage to the tablet PC 31.

Additionally, when the tablet PC 31 detected to be in the about-to-fall status, the control unit 132 controls the warning signal generating unit 133 to generate a warning signal in addition to controlling the protrusions 121 of the resistor 12 to protrude outside the openings 111. This helps the user to be warned that the tablet PC 31 is about to fall, thus the user is notified to adjust the status of the tablet PC 31, such as to move the tablet PC 31 inward to prevent falling from the desk 41.

Of the protective unit 100 of the present embodiment, the warning signal is not limited to any kinds of warning signal; warning sound, warning light, or any combination thereof is available. The warning signal generating unit 133 generates a warning sound while the tablet PC 31 is in that about-to-fall status in this embodiment, a warning sign is shown on the screen of the tablet PC 31 to remind the user to take action regarding the about-to-fall tablet PC 31.

Furthermore, the protective unit 100 of embodiment 1 of the present invention further comprises a power supply unit, which is not shown in the figure. The power supply unit is for supplying power to the protective unit 100 to maintain the operation thereof. Additionally, the protective unit 100 of embodiment 1 of the present invention further comprises a switching unit, which is disposed between the control unit 132 and the resistor 12. The switching unit receives commands from the control unit 132 to turn on or off the resistor 12.

### Embodiment 2

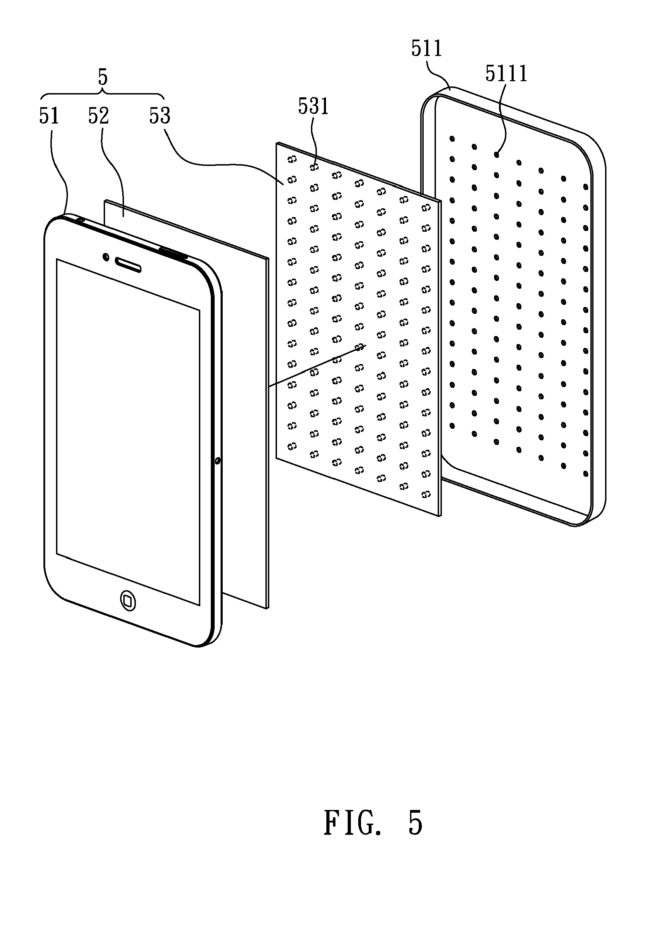

The present embodiment is for providing an electronic module having the protective unit. Concerning to the electronic module having the protective unit of the present embodiment, please refer to FIG. 5, which is a schematic view illustrating the electronic module 5 having the protective unit of embodiment 2 of the present invention. As shown in FIG 5, the electronic module 5 having the protective unit of embodiment 2 of the present invention comprises: an electronic device 51, a detector or detecting member 52, and a resistor or resistant member 53. The electronic device 51 includes an outer shell 511 that has a plurality of openings 5111 thereon. Moreover, the resistor 53 has a plurality of protrusions 531 and the plurality of protrusions 531 is disposed in the plurality of openings 5111 correspondingly.

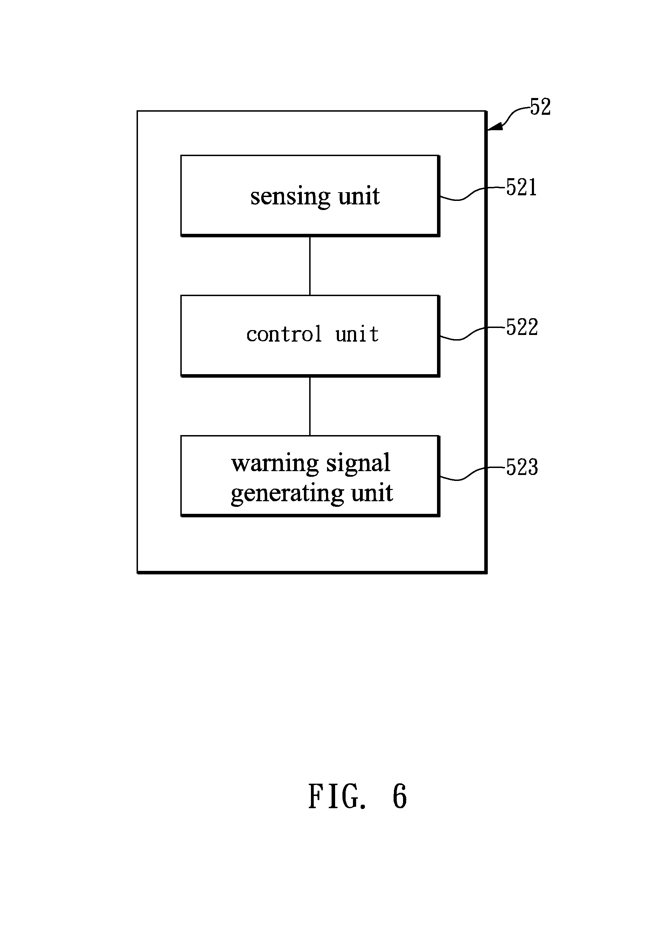

Besides, the detector 52 is disposed within the electronic device 51. Please refer to FIG 6 simultaneously, which is a schematic view illustrating the detector 52 of the electronic module 5 having the protective unit according to embodiment 2 of the present invention. As shown in FIG 6, the detector 52 includes: a sensing unit 521, a control unit 522, and a warning signal generating unit 523. Furthermore, the sensing unit 521 is for executing a sensing mechanism; the control unit 522 is electrically connected with the sensing unit 521; and the warning signal generating unit 523 is electrically connected with the control unit 522. Wherein the sensing unit 521 executes the sensing mechanism continuously, when the sensing mechanism detects a predetermined condition, the sensing unit 521 sends an indicating signal to the control unit 522 to command the plurality of protrusions 531 of the resistor 53 to protrude outside the plurality of openings 5111. The control unit 522 then controls the warning signal generating unit 523 to generate a warning signal.

Of the electronic module 5 having the protective unit as shown in FIG. 5, the electronic module 5 is to be a mobile telecommunication device. The implementation of the electronic module having the protective unit of embodiment 2 is the same as that of embodiment 1 and hence the detailed description of embodiment 2 is omitted. The efficiencies of embodiment 2 are achieved by referring to the description recorded in embodiment 1.

Although the present invention has been explained in relation to its preferred embodiment, it is to be understood that many other possible modifications and variations can be made without departing from the spirit and scope of the invention as hereinafter claimed.

## Claims

1. An electronic module having a protective unit comprising:
an electronic device including:
an outer shell having a plurality of openings;
a resistor having a plurality of protrusions, the plurality of protrusions being disposed in the plurality of openings correspondingly; and
a detector being disposed within the electronic device including:
a sensing unit for executing a sensing mechanism;
a control unit electrically connected with the sensing unit; and
a warning signal generating unit electrically connected with the control unit;
wherein the sensing unit executes the sensing mechanism continuously, when the sensing mechanism detects a predetermined condition, the sensing unit sends an indicating signal to the control unit to command the plurality of protrusions of the resistor to protrude outside the plurality of openings.

2. The electronic module having a protective unit as claimed in claim 1, wherein the electronic device is a mobile telecommunication device, a tablet PC, a laptop computer or a PDA.

3. The electronic module having a protective unit as claimed in claim 1, wherein the plurality of protrusions are composed of anti-slip material, elastic material, shock-absorbing material, or any combination thereof.

4. The electronic module having a protective unit as claimed in claim 1, wherein the sensing unit is an area-contact sensing unit, and the sensing mechanism is to monitor any one of several contact areas between the outer shell of the electronic device and an external object.

5. The electronic module having a protective unit as claimed in claim 4, the predetermined condition is that the contact area between the outer shell of the electronic device and the external object be smaller than a predetermined value, and the default area is 50% to 70% of the surface area of the outer shell.

6. The electronic module having a protective unit as claimed in claim 1, wherein the electronic module having a protective unit further comprises: the control unit which controls the warning signal generating unit to generate a warning signal when the sensing unit sends an indicating signal to the control unit.

7. The electronic module having a protective unit as claimed in claim 1, wherein the detecting device further comprises a switching unit, and the switching unit is disposed between the control unit and the resistor.

8. A protective unit comprising:
an outer shell having a plurality of openings;
a resistor having a plurality of protrusions, the plurality of protrusions being disposed in the plurality of openings correspondingly; and
a detector being disposed within the outer shell including:
a sensing unit for executing a sensing mechanism;
a control unit electrically connected with the sensing unit; and
a warning signal generating unit electrically connected with the control unit;
wherein the sensing unit executes the sensing mechanism continuously, when the sensing mechanism detects a predetermined condition, the sensing unit sends an indicating signal to the control unit to command the plurality of protrusions of the resistor to protrude outside the plurality of openings, and the control unit controls the warning signal generating unit to generate a warning signal.

9. The protective unit as claimed in claim 9, wherein the protective unit is used accompanied with an electronic device.

10. The protective unit as claimed in claim 10, wherein the electronic device is a tablet PC, a mobile telecommunication device, a laptop computer or a PDA.

11. The protective unit as claimed in claim 9, wherein the plurality of protrusions is composed of anti-slip material, elastic material, shock-absorbing material, or any combination thereof.

12. The protective unit as claimed in claim 9, wherein the sensing unit is an area-contact sensing unit, and the sensing mechanism is to monitor any one of several contact areas between the outer shell and an external object.

13. The protective unit as claimed in claim 13, the predetermined condition is that the contact area between the outer shell of the electronic device and an arbitrary external object be smaller than a predetermined value, and the default area is 50% to 70% of the surface area of the outer shell.

14. The protective unit as claimed in claim 9, wherein the protective unit further comprises: the control unit controls the warning signal generating unit to generate a warning signal when the sensing unit sends an indicating signal to the control unit.
